Europäisches Patentamt

European Patent Office

Office européen des brevets

(19)

(11) Veröffentlichungsnummer : **0 320 770 B1**

# EUROPÄISCHE PATENTSCHRIFT

(12)

(45) Veröffentlichungstag der Patentschrift :
29.01.92 Patentblatt 92/05

(51) Int. Cl.$^5$ : **C01B 33/32, C11D 3/08**

(21) Anmeldenummer : **88120434.1**

(22) Anmeldetag : **07.12.88**

(54) **Verfahren zur Herstellung von kristallinen Natriumschichtsilikaten.**

(30) Priorität : **11.12.87 DE 3742043**

(43) Veröffentlichungstag der Anmeldung :
**21.06.89 Patentblatt 89/25**

(45) Bekanntmachung des Hinweises auf die
Patenterteilung :
**29.01.92 Patentblatt 92/05**

(84) Benannte Vertragsstaaten :
**AT BE CH DE ES FR GB IT LI NL SE**

(56) Entgegenhaltungen :
**EP-A- 0 056 094
EP-A- 0 164 552
DE-A- 3 413 571
GLASTECHN. BER., Band 37, Nr. 4, April 1964,
Seiten 194-200, Frankfurt, DE; A. WILLGALLIS
et al.: "Zur Polymorphie des Na2Si2O5"**

(56) Entgegenhaltungen :
**ZEITSCHRIFT FÜR KRISTALLOGRAPHIE,
Band 129, 1969, Seiten 396-404, München, DE;
W. HOFFMANN et al.: "Über die gamma- und
delta-Modifikationen des Natriumdisilikates
Na2Si2O5"**

(73) Patentinhaber : **HOECHST
AKTIENGESELLSCHAFT
Postfach 80 03 20
W-6230 Frankfurt am Main 80 (DE)**

(72) Erfinder : **Rieck, Hans-Peter, Dr.
Staufenstrasse 13a
W-6238 Hofheim am Taunus (DE)**
Erfinder : **Schott, Martin, Dr.
Königsteiner Strasse 7
W-6374 Steinbach (DE)**
Erfinder : **Ott, Willy
Breslauer Strasse 27
W-6233 Kelkheim (Taunus) (DE)**
Erfinder : **Gohla, Werner
Rathausstrasse 73
W-5216 Niederkassel (DE)**

## Beschreibung

Die vorliegende Erfindung betrifft ein Verfahren zur Herstellung von Natriumschichtsilikaten, die gemäß Röntgendiffraktionsspektrum kristallin sind und ein Molverhältnis $SiO_2/Na_2O$ von 1,9 : 1 bis 3,5 : 1 aufweisen, durch Entwässerung einer Natriumsilikatlösung bei erhöhter Temperatur.

Die verschiedenen bekanntgewordenen kristallinen Natriumsilikate lassen sich voneinander durch ihre Zusammensetzung (manchmal lediglich als $SiO_2/Na_2O$-Verhältnis angegeben) sowie durch ihr jeweils spezifisches Röntgenbeugungsdiagramm unterscheiden. Häufig läßt sich ein Natriumsilikat bei unveränderter Zusammensetzung mit unterschiedlichen Kristallstrukturen herstellen. Die einzelnen Formen unterscheiden sich im allgemeinen in ihren physikalischen und chemischen Eigenschaften — wenn auch mitunter geringfügig — voneinander. Daß es sich um kristalline Formen handelt, ergibt sich aus dem Röntgendiffraktionsspektrum.

Es gehört zu den typischen Eigenschaften der kristallinen Natriumschichtsilikate, daß sie mit äquivalenten Mengen an Salzsäure in freie Schichtkieselsäuren überführt werden können. Die dazu notwendige Menge an Säure definiert die Ionenaustauscherkapazität des Natriumsilikats. Diese Kapazität kann durch Titration bestimmt werden. Die gleichzeitig anfallenden freien Säuren sind in Wasser schwer löslich.

Die Herstellung kristalliner Natriumsalze von Kieselsäuren mit einem $SiO_2/Na_2O$-Verhältnis von 2 : 1 bis 3 : 1 erfolgt üblicherweise durch Temperung von Natriumsilikat-Gläsern oder durch Erhitzen von Natriumcarbonat und Quarz (DE-OS 3100942.

Willgallis und Range (Glastechn. Ber., 37 (1964), 194-200) beschreiben die Herstellung von $\alpha$-, $\beta$- und $\gamma$-$Na_2Si_2O_5$ durch Temperung von geschmolzenem und nicht geschmolzenem entwässertem Natronwasserglas. Diese Produkte haben Schichtstruktur. Daß es sich um kristalline Formen handelt, ergibt sich aus den Röntgendiffraktionsspektren. Die Autoren zeigen, daß in Abhängigkeit von der Temperatur verschiedene Kristallformen erhalten werden. Die Herstellung von $\delta$-$Na_2Si_2O_5$ ist nach diesem Verfahren nicht möglich.

Benecke und Lagaly beschreiben in Am. Mineral., 62 (1977), 763-771 ein Verfahren zur Herstellung eines hydratisierten, kristallinen Natriumsilikats mit Kanemit-Struktur (etwa der Zusammensetzung $NaHSi_2O_5$). Dabei wird in einem ersten Schritt $SiO_2$ in Methanol dispergiert und mit kalter Natronlauge versetzt. Dieses Verfahren ist aufwendig wegen der kontrollierten Zugabe der einzelnen Substanzen und erfordert wegen der Verwendung von brennbarem Methanol spezielle Sicherheitsvorkehrungen.

In der DE-OS 3417649 wird ein Verfahren beschrieben, bei dem man hydratisiertes Natriumsilikat mit Kristallkeimen versetzt, die Reaktionsmischung durch Erhitzen entwässert und die entwässerte Reaktionsmischung so lange bei einer Temperatur hält, die mindestens 450°C beträgt, jedoch unter dem Schmelzpunkt liegt, bis das kristalline Natriumsilikat mit Schichtstruktur sich abgeschieden hat.

Bei der Entwässerung (beim Eindampfen) von Wasserglaslösungen oder Lösungen üblicher Natriumsilikate (ohne Schichtstruktur) mit einem Molverhältnis $SiO_2/Na_2O$ von 1,9 : 1 bis 3,5 : 1 werden amorphe Produkte erhalten. Erst bei Temperaturen oberhalb 450°C und im Verlauf mehrerer Stunden kristallisieren diese Produkte in Gegenwart einer wäßrigen Phase (DE-OS 3417649). Für diese Reaktion sind im allgemeinen mehrere Stunden notwendig. Bei Temperaturen zwischen 600 und 850°C reichen mitunter auch Minuten und bei bestimmten Silikaten Bruchteile einer Minute aus.

Es bestand nun die Aufgabe, die primär angefallenen kristallisierten Natriumschichtsilikate von Verunreinigungen, insbesondere schwer löslichen Verunreinigungen, zu befreien. Der Erfindung liegt die Beobachtung zugrunde, daß einige kristalline Natriumschichtsilikate, insbesondere der Zusammensetzung $Na_2Si_2O_5$, sich in Wasser auflösen und die wäßrigen Lösungen beim Entwässern wieder kristalline Natriumschichtsilikate zurückbilden. Dies ist überraschend, weil bekannt ist, daß Alkalisikate in Lösung relativ schnell ein von Konzentration, Temperatur und pH-Wert abhängiges Polymerisationsgleichgewicht ausbilden (Gmelin, Bd. 16, Abschnitt C, S. 259 — Phosphor). Dies bedeutet, daß die ursprünglich im Kristallgitter vorhandenen schichtförmigen Polyanionen zerstört würden.

Es wurde nun ein Verfahren zur Herstellung von röntgenkristallinen Natriumsilikaten mit Schichtstruktur, die ein Molverhältnis $SiO_2 : Na_2O$ von 1,9 bis 3,5 aufweisen, gefunden, das dadurch gekennzeichnet ist, daß man ein röntgenkristallines Natriumsilikat mit Schichtstruktur und einem Molverhältnis $SiO_2 : Na_2O$ von 1,9 bis 3,5 in Wasser auflöst und die Lösung bei Temperaturen von 20 bis 445°C eindampft.

Vorzugsweise wird die Lösung des Schichtsilikates zur Befreiung von Verunreinigungen vor dem Eindampfen filtriert. Das Eindampfen geschieht vorzugsweise bei Temperaturen von 70 bis 300°C, insbesondere 100 bis 200°C.

Die in Wasser aufzulösenden Natriumsilikate mit Schichtstruktur lassen sich in an sich bekannter Weise aus wäßrigen Lösungen von amorphem Alkalisilikat gewinnen. Für das erfindungsgemäße Verfahren ist es vorteilhaft, eine konzentrierte Lösung des Natriumschichtsilikats herzustellen, da in verdünnter Lösung und bei längerer Einwirkung von Wasser, insbesondere bei erhöhter Temperatur, Hydrolyse eintritt, wodurch das Schichtsilikat zu niedermolekularen Bruchstücken abgebaut wird, die sich nicht mehr in kristalline Schichtsilikate überführen lassen.

Insbesondere lassen sich nach dem erfindungsgemäßen Verfahren auch Silikate der Zusammensetzung $Na_2Si_2O_5$ herstellen. Hierbei ist beispielsweise die Verbindung Na-SKS-7 zu nennen, deren Röntgendiffraktionsspektrum in der DE-OS 3417649, Tabelle 3 und deren Herstellung in Glastechn. Ber., Bd. 37 (1967) 194-200 beschrieben ist. Es hat sich gezeigt, daß sich Na-SKS-7 auch durch Umkristallisieren der Verbindung Na-SKS-6 erhalten läßt. Das Röntgendiffraktionsspektrum von Na-SKS-6 findet sich in Tabelle 2 der DE-OS 3417649. Seine Herstellung durch Tempern von Natriumdisilikatglas wird von Hoffmann und Scheelbeschrieben in der Zeitschrift f. Kristallographie, Bd. 129 (1969), S. 396-404. Es hat die ungefähre Zusammensetzung $Na_2Si_2O_5$.

In den meisten Fällen haben die erfindungsgemäß hergestellten Silikate das gleiche Verhältnis $Na_2O/SiO_2$ wie das jeweilige Ausgangsmaterial. Sie müssen jedoch nicht dasselbe Röntgenbeugungsdiagramm aufweisen.

Die erfindungsgemäß hergestellten kristallinen Natriumschichtsilikate können anhand ihres Röntgenbeugungsdiagramms identifiziert werden. Typische Röntgenbeugungsdiagramme sind in den Tabellen 1 bis 7 aufgeführt.

Das erfindungsgemäße Verfahren des Auflösens und Wiederauskristallisierens von Natriumschichtsilikaten ist auch für die Herstellung von Wasch- und Reinigungsmitteln (insbesondere Geschirrspülmitteln) von Bedeutung. In der DE-OS 3413571 wird beschrieben, daß kristalline Alkalischichtsilikate sich als Builder eignen. Die festen Silikate können dabei den übrigen Bestandteilen einer Waschmittel- und Reinigungsmittelformulierung zugemischt werden.

In weiterer Ausgestaltung des erfindungsgemäßen Verfahrens wurde ein Verfahren zur Herstellung von Wasch- oder Reinigungsmitteln gefunden, bei dem man ein Gemisch aus Tensiden und Buildern, das noch Füllstoffe, Bleichmittel, Bleichaktivatoren und Hilfsstoffe enthalten kann, mit Wasser anteigt, durchmischt und dann sprühtrocknet. Dieses Verfahren ist dadurch gekennzeichnet, daß man dem Wasser enthaltenden Gemisch ein röntgenkristallines Natriumschichtsilikat mit einem Molverhältnis $SiO_2 : Na_2O$ von 1,9 bis 3,5, einverleibt. Beim Durchmischen und nachfolgendem Sprühtrocknen kommt es dabei mindestens teilweise zu einem Umkristallisieren des Natriumschichtsilikats.

Man kann bei der Konfektionierung der Wasch- und Reinigungsmittel anstelle des festen Natriumschichtsilikats auch deren wäßrige Lösung verwenden und mit weiteren Bestandteilen des Wasch- und Reinigungsmittels vermischen und das Gemisch anschließend entwässern. Diese Entwässerung findet vorteilhafterweise im Sprühturm statt. Für den Sprühvorgang sind Gaseintritts-Temperaturen von 70 bis 300°C, insbesondere 100 bis 200°C vorteilhaft.

Kristalline, nicht gelöste Alkalischichtsilikate müssen im einzudampfenden Gemisch nicht unbedingt vorhanden sein, fördern jedoch als Keime die Kristallisation.

Bleichaktivatoren, Tenside, Builder, Bleichmittel und Hilfsstoffe stellen übliche Bestandteile von Waschmitteln dar. Diese Bestandteile können in weiten Grenzen variiert werden.

Zu den Tensiden gehören die anionischen Tenside, wie Seife, Alkylbenzolsulfonate, Alkansulfonate, $\alpha$-Olefinsulfonate, Hydroxyalkansulfonate, $\alpha$-sulfatofettsäuremethylester, Alkylsulfate, Alkylethersulfate, weiterhin nichtionische Tenside, wie primäre oder sekundäre Alkoholoxethylate, Alkylphenoloxethylate, Fettsäureethanolamide, Aminoxide, weiterhin kationische Tenside wie Tetraalkyl-ammoniumchloride sowie amphotere Tenside, wie Sulfobetaine und Betaine.

Zu den Bleichmitteln gehören vor allem solche auf Peroxid-und Hypochlorit-Basis, wie Natriumperborat, oder Natriumhypochlorit-Lösung.

Weiterhin können Bleichaktivatoren, wie z.B. Tetraacetylethylendiamin, Bleichkatalysatoren und Bleichstabilisatoren, wie Magnesiumsilicat eingesetzt werden.

Zu den Hilfsstoffen gehören Enzyme, Vergrauungsinhibitoren, Schaumregulatoren, Korrosionsinhibitoren, optische Aufheller, Duftstoffe, Farbstoffe sowie Stellmittel und Konfektionierungshilfen.

Die Erfindung wird durch die Beispiele näher erläutert.

**Beispiel 1**

50 Teile Na-SKS-6 ($Na_2O : 2 SiO_2$), welches gemäß der DE-OS 2317649 (Beispiel 3) hergestellt worden ist, wird mit 50 Teilen Wasser versetzt und auf 80°C erhitzt, so daß eine trübe Lösung erhalten wird. Der Ansatz wird zunächst noch zehn Stunden bei 80°C gehalten und anschließend bei 120°C entwässert. Das Röntgenbeugungsdiagramm ist in Tabelle 8 aufgeführt. Es entspricht dem von Na-SKS-7 (Tabelle).

**Beispiel 2**

45 Teile Na-SKS-6 (Na$_2$O : 2 SiO$_2$), welches gemäß der DE-OS 3417649 hergestellt worden ist, wird mit 55 Teilen Wasser versetzt und 45 Minuten auf 60°C erhitzt. Der Ansatz wird anschließend in einem Sprühtrockner ("Büchi" 190) mit einem Druck von 5 bar verdüst. Die Eingangstemperatur der Luft beträgt 170°C, die Ausgangstemperatur 80°C. Das Röntgenbeugungsdiagramm ist in Tabelle 9 aufgeführt. Es entspricht Na-SKS-7.

**Beispiel 3**

50 Teile röntgenamorphes sprühgetrocknetes Natriumsilicat der Zusammensetzung Na$_2$O : SiO$_2$ (mit ca. 18% Wasser) wird analog Beispiel 1 umkristallisiert. Das erhaltene Produkt ist röntgenamorph.

## Tabelle 1

Na-SKS-5

| $d(10^{-8}\ cm)$ | | rel. Intensität |
|---|---|---|
| 4,92 | ($\pm$ 0,10) | m - st |
| 3,95 | ($\pm$ 0,08) | schw |
| 3,85 | ($\pm$ 0,08) | m - st |
| 3,77 | ($\pm$ 0,08) | st - sst |
| 3,29 | ($\pm$ 0,07) | sst |
| 3,20 | ($\pm$ 0,06) | schw |
| 2,64 | ($\pm$ 0,05) | schw - m |
| 2,53 | ($\pm$ 0,05) | schw |
| 2,45 | ($\pm$ 0,05) | m - st |
| 2,41 | ($\pm$ 0,05) | schw |
| 2,38 | ($\pm$ 0,05) | schw |

## Tabelle 2

Na-SKS-6

| $d(10^{-8})$ | | rel. Intensität |
|---|---|---|
| 4,92 | ($\pm$ 0,10) | schw |
| 3,97 | ($\pm$ 0,08) | sst |
| 3,79 | ($\pm$ 0,08) | m - st |
| 3,31 | ($\pm$ 0,07) | schw |
| 3,02 | ($\pm$ 0,06) | schw - m |
| 2,85 | ($\pm$ 0,06) | schw |
| 2,65 | ($\pm$ 0,05) | schw |
| 2,49 | ($\pm$ 0,05) | schw |
| 2,43 | ($\pm$ 0,05) | m |

## Tabelle 3

Na-SKS-7

| $d(10^{-8} \text{ cm})$ | | rel. Intensität |
|---|---|---|
| 7,96 | ($\pm$ 0,16) | schw |
| 6,00 | ($\pm$ 0,12) | st - sst |
| 5,48 | ($\pm$ 0,11) | schw |
| 4,92 | ($\pm$ 0,11) | schw |
| 4,30 | ($\pm$ 0,09) | m |
| 4,15 | ($\pm$ 0,08) | st |
| 3,96 | ($\pm$ 0,08) | st - sst |
| 3,78 | ($\pm$ 0,08) | m - st |
| 3,63 | ($\pm$ 0,07) | sst |
| 3,31 | ($\pm$ 0,07) | schw |
| 3,12 | ($\pm$ 0,06) | schw - m |
| 3,08 | ($\pm$ 0,06) | schw - m |
| 3,06 | ($\pm$ 0,06) | m - st |
| 2,97 | ($\pm$ 0,06) | st - sst |
| 2,85 | ($\pm$ 0,06) | schw |
| 2,70 | ($\pm$ 0,05) | schw - m |
| 2,66 | ($\pm$ 0,05) | m - st |
| 2,63 | ($\pm$ 0,05) | schw |
| 2,59 | ($\pm$ 0,06) | schw - m |
| 2,54 | ($\pm$ 0,05) | schw - m |
| 2,43 | ($\pm$ 0,05) | sst |

## Tabelle 4:

Na-SKS-11

| $d(10^{-8}$ cm) | | rel. Intensität |
|---|---|---|
| 6,08 | ($\pm$ 0,12) | schw |
| 5,88 | ($\pm$ 0,12) | schw - m |
| 4,22 | ($\pm$ 0,08) | sst |
| 3,26 | ($\pm$ 0,07) | schw - m |
| 3,03 | ($\pm$ 0,06) | schw - m |
| 2,94 | ($\pm$ 0,06) | m |
| 2,89 | ($\pm$ 0,06) | schw |
| 2,64 | ($\pm$ 0,05) | schw - m |
| 2,56 | ($\pm$ 0,05) | schw - m |
| 2,49 | ($\pm$ 0,05) | schw |
| 2,43 | ($\pm$ 0,05) | schw |

## Tabelle 5

Na-SKS-9

| $d(10^{-8}$ cm) | | rel. Intensität |
|---|---|---|
| 7,79 | ($\pm$ 0,16) | m - sst |
| 4,68 | ($\pm$ 0,09) | m - sst |
| 4,06 | ($\pm$ 0,08) | schw - m |
| 3,94 | ($\pm$ 0,08) | schw - m |
| 3,86 | ($\pm$ 0,08) | schw - m |
| 3,62 | ($\pm$ 0,07) | sst |
| 3,55 | ($\pm$ 0,07) | st - sst |
| 3,53 | ($\pm$ 0,07) | st - sst |
| 3,26 | ($\pm$ 0,07) | schw - m |
| 3,18 | ($\pm$ 0,06) | schw - m |
| 2,72 | ($\pm$ 0,05) | schw - m |
| 2,46 | ($\pm$ 0,05) | schw - m |

## Tabelle 6

Na-SKS-10

| $d(10^{-8}$ cm$)$ | rel. Intensität |
|---|---|
| 10,3  $(\pm\ 0,21)$ | m – sst |
| 5,17 $(\pm\ 0,10)$ | schw – m |
| 4,02 $(\pm\ 0,08)$ | sst |
| 3,65 $(\pm\ 0,07)$ | m – st |
| 3,45 $(\pm\ 0,07)$ | m – sst |
| 3,17 $(\pm\ 0,06)$ | m – sst |
| 3,11 $(\pm\ 0,06)$ | schw – st |
| 2,48 $(\pm\ 0,05)$ | m – sst |
| 2,33 $(\pm\ 0,05)$ | schw – m |
| 2,01 $(\pm\ 0,04)$ | schw – m |

## Tabelle 7

Na-SKS-13

| $d(10^{-8}$ cm$)$ | rel. Intensität |
|---|---|
| 6,37 $(\pm\ 0,13)$ | m – st |
| 4,04 $(\pm\ 0,08)$ | m – st |
| 3,87 $(\pm\ 0,08)$ | sst |
| 3,58 $(\pm\ 0,07)$ | m – st |
| 3,20 $(\pm\ 0,06)$ | schw – m |
| 3,04 $(\pm\ 0,06)$ | schw – m |
| 2,67 $(\pm\ 0,05)$ | schw – m |
| 2,45 $(\pm\ 0,05)$ | schw – m |
| 2,31 $(\pm\ 0,05)$ | schw – m |

## Tabelle 8

(Beispiel 1)

| $d(10^{-8}$ cm) | | rel. Intensität |
|---|---|---|
| 7,94 | ($\pm$ 0,16) | schw |
| 6,0 | ($\pm$ 0,12) | st |
| 5,47 | ($\pm$ 0,11) | schw |
| 4,92 | ($\pm$ 0,10) | schw |
| 4,29 | ($\pm$ 0,09) | m |
| 4,14 | ($\pm$ 0,08) | m - st |
| 3,96 | ($\pm$ 0,08) | sst |
| 3,78 | ($\pm$ 0,08) | m |
| 3,63 | ($\pm$ 0,07) | st - sst |
| 3,31 | ($\pm$ 0,07) | schw |
| 3,11 | ($\pm$ 0,06) | schw |
| 3,06 | ($\pm$ 0,06) | schw |
| 2,97 | ($\pm$ 0,06) | sst |
| 2,84 | ($\pm$ 0,06) | schw |
| 2,77 | ($\pm$ 0,05) | schw |
| 2,69 | ($\pm$ 0,05) | schw - m |
| 2,66 | ($\pm$ 0,05) | schw - m |
| 2,59 | ($\pm$ 0,05) | schw |
| 2,54 | ($\pm$ 0,05) | schw - m |
| 2,49 | ($\pm$ 0,05) | schw |
| 2,43 | ($\pm$ 0,05) | sst |
| 2,37 | ($\pm$ 0,05) | schw |

## Tabelle 9

(Beispiel 2)

| $d(10^{-8}$ cm) | | rel. Intensität |
|---|---|---|
| 7,86 | $(\pm 0,16)$ | schw |
| 5,97 | $(\pm 0,12)$ | m - st |
| 5,44 | $(\pm 0,11)$ | schw |
| 4,89 | $(\pm 0,10)$ | schw |
| 4,27 | $(\pm 0,09)$ | m |
| 4,12 | $(\pm 0,08)$ | m - st |
| 3,94 | $(\pm 0,08)$ | sst |
| 3,77 | $(\pm 0,08)$ | m |
| 3,62 | $(\pm 0,07)$ | st |
| 3,43 | $(\pm 0,07)$ | schw |
| 3,30 | $(\pm 0,07)$ | schw |
| 3,05 | $(\pm 0,06)$ | m |
| 2,96 | $(\pm 0,06)$ | st - sst |
| 2,83 | $(\pm 0,06)$ | schw |
| 2,68 | $(\pm 0,05)$ | schw - m |
| 2,65 | $(\pm 0,05)$ | schw - m |
| 2,58 | $(\pm 0,05)$ | schw |
| 2,54 | $(\pm 0,05)$ | schw - m |
| 2,48 | $(\pm 0,05)$ | schw |
| 2,42 | $(\pm 0,05)$ | st - sst |
| 2,36 | $(\pm 0,05)$ | schw |

## Patentansprüche

1. Verfahren zur Herstellung von röntgenkristallinem Natriumsilikaten mit Schichtstruktur, die ein Molverhältnis $SiO_2$ : $Na_2O$ von 1,9 bis 3,5 aufweisen, dadurch gekennzeichnet, daß man ein röntgenkristallines Natriumsilikat mit Schichtstruktur und einem Molverhältnis $SiO_2$ : $Na_2O$ von 1,9 bis 3,5 in Wasser auflöst und die Lösung bei Temperaturen von 20 bis 445°C eindampft.

2. Verfahren nach Anspruch 1, dadurch gekennzeichnet, daß man bei Temperaturen von 70 bis 300°C, insbesondere 100 bis 200°C eindampft.

3. Verfahren zur Herstellung von Wasch- oder Reinigungsmitteln, wobei man ein Gemisch aus Tensiden und Buildern, das noch Füllstoffe, Bleichmittel, Bleichaktivatoren und Enzyme enthalten kann, mit Wasser anteigt, durchmischt und dann sprühtrocknet, dadurch gekennzeichnet, daß man dem Wasser enthaltenden Gemisch ein röntgenkristallines Natriumschichtsilikat mit einem Molverhältnis $SiO_2$ : $Na_2O$ von 1,9 bis 3,5 einverleibt und dabei zumindest teilweise ein Umkristallisieren des Natriumschichtsilikants herbeiführt.

**Claims**

1. A process for the preparation of X-ray crystalline sodium silicates which have a sheet structure and an $SiO_2/Na_2O$ molar ratio of 1.9 : 1 to 3.5 : 1, which comprises dissolving an X-ray crystalline sodium silicate having a sheet structure and an $SiO_2/Na_2O$ molar ratio of 1.9 : 1 to 3.5 : 1 in water and evaporating the solution at temperatures of 20 to 445°C.

2. A process as claimed in claim 1, wherein evaporation is carried out at temperatures of 70 to 300°C, in particular 100 to 200°C.

3. A process for the preparation of detergents or cleaners, in which a mixture of surfactants and builders, which may also contain fillers, bleaching agents, bleach activators and enzymes, is made into a paste with water, mixed thoroughly and then spray-dried, wherein an X-ray crystalline sheet sodium silicate having an $SiO_2/Na_2O$ molar ratio of 1.9 : 1 to 3.5 : 1 is incorporated into the water-containing mixture and at the same time effecting at least partial recrystallization of the sheet sodium silicate.

**Revendications**

1. Procédé de préparation de silicates de sodium à phyllostructure, cristallisés d'après leur spectre de rayons X, de rapport molaire $SiO_2 : Na_2O$ compris entre 1,9 et 3,5, procédé caractérisé en ce que l'on dissout dans de l'eau un silicate de sodium à phyllostructure cristallisé d'après le spectre X, de rapport molaire $SiO_2 : Na_2O$ compris entre 1,9 et 3,5, et on évapore la solution à des températures de 20 à 445°C.

2. Procédé selon la revendication 1, caractérisé en ce que l'on évapore la solution à des températures de 70 à 300°C, en particulier de 100 à 200°C.

3. Procédé de fabrication de produits de lavage et nettoyage dans lequel on met en pâte avec de l'eau un mélange de surfactifs et d'adjuvants de détergence pouvant encore contenir des charges, agents de blanchiment, activants de blanchiment et enzymes, on mélange le tout puis on sèche le mélange par pulvérisation, procédé caractérisé en ce que l'on incorpore au mélange aqueux un phyllosilicate de sodium à structure cristalline d'après son diagramme de rayons X, d'un rapport molaire $SiO_2 : Na_2O$ compris entre 1,9 et 3,5, ce qui donne une recristallisation au moins partielle du phyllosilicate de sodium.